# FASCICULE DE BREVET EUROPEEN

(11) **EP 2 878 734 B1**
(45) Date de publication et mention de la délivrance du brevet: **13.04.2016**
(21) Numéro de dépôt: 14194953.7
(22) Date de dépôt: 26.11.2014
(51) Int. Cl.: E02D 29/12, H02G 9/10

(54) **Dispositif de chambre de raccordement**
Anschlussraumvorrichtung
Device of a splicing chamber

(30) Priorité: 28.11.2013 FR 1361738
(43) Date de publication de la demande: 03.06.2015
(73) Titulaire: Semap Composite, 08120 Bogny Sur Meuse (FR)
(72) Inventeur: Krattli, Christian, 08120 Bogny Sur Meuse (FR)
(74) Mandataire: Rhein, Alain

(56) Documents cités:
- FR-A1- 2 837 851
- FR-A1- 2 941 716

## Description

La présente invention a trait, dans le domaine des ouvrages civils souterrains, à un dispositif de chambre de raccordement disposé à la jonction des réseaux d'électricité et/ou de télécommunication, pour y réaliser des raccordements.

On connait déjà des dispositifs de chambre de raccordement de conception simple et de mise en oeuvre aisée, permettant de remplacer ceux utilisés auparavant et réalisé en béton. Un tel dispositif est décrit dans le document FR 2 941 716.

Le dispositif de chambre de raccordement décrit dans ce document FR 2 941 716 consiste en une pièce utilisée enterrée dans le sol, de forme parallélépipédique rectangle, fermée supérieurement par un ou plusieurs tampons, et logeant des moyens de raccordement de fils ou câbles faisant partie d'un réseau de distribution, et qui est constituée de la superposition, au travers de moyens d'emboîtement, d'au moins deux éléments, chacun venant de moulage d'un matériau composite, et chacun comprenant une paroi périphérique constituée de deux peaux délimitant un espace destiné à être rempli de béton.

Un tel dispositif présente de nombreux avantages par rapport à ce qui existait auparavant, notamment en ce qui concerne la facilité de mise en oeuvre, en raison de son faible poids et de l'encombrement réduit des pièces qui le composent, et également en matière de facilité de stockage.

Ce dispositif présente toutefois encore quelques inconvénients, notamment en ce qu'il nécessite de couler du béton, lequel est cependant nécessaire pour assurer la cohésion des différents éléments qui constituent un coffrage perdu. D'autre part, la partie supérieure du dispositif ne permet pas d'accueillir de manière optimisée un ou plusieurs tampons.

Par ailleurs, les dispositifs de chambre de raccordement de type permettent difficilement de gérer le problème de l'eau de ruissellement, que ce soit à l'extérieur comme à l'intérieur du dispositif de chambre de raccordement.

La présente invention a pour but de proposer un dispositif de chambre de raccordement permettant de remédier aux divers inconvénients précités.

Le dispositif de chambre de raccordement selon l'invention consiste en une pièce utilisée enterrée dans le sol, de forme parallélépipédique rectangle, fermée supérieurement par un ou plusieurs tampons, et logeant des moyens de raccordement de fils ou câbles faisant partie d'un réseau de distribution, constitué de la superposition, au travers de moyens d'emboîtement, d'éléments en forme de cadre, et comprenant au moins un élément de base et un élément supérieur destiné à recevoir le ou lesdits tampons, où chacun desdits éléments vient de moulage d'un matériau composite, et il se caractérise en ce que chacun desdits éléments comporte, outre lesdits moyens d'emboîtement, des moyens de réception de moyens de liaison conçus aptes à la solidarisation entre eux de deux éléments superposés, et en ce que chacun desdits éléments de base présente extérieurement et périphériquement des moyens de collecte d'eau de ruissellement, ainsi que des moyens d'évacuation de cette eau de ruissellement.

Selon une caractéristique additionnelle du dispositif de chambre de raccordement selon l'invention, chacun des moyens de réception de moyens de liaison consiste en une cavité ou une partie saillante localisée à proximité du bord inférieur d'un côté de l'élément, et percée d'un trou apte à permettre le passage d'une vis destinée à être vissée dans un autre élément.

Selon une autre caractéristique additionnelle du dispositif de chambre de raccordement selon l'invention, les moyens d'emboîtement consistent en des plots faisant saillie de la face supérieure d'un élément, et destinés à coopérer en emboîtement avec des cavités pratiquées dans la face inférieure de l'élément à superposer.

Selon une autre caractéristique additionnelle du dispositif de chambre de raccordement selon l'invention, les moyens d'emboîtement consistent en une gorge périphérique que comporte la face supérieure d'un élément, et destinée à accueillir une nervure périphérique qui fait saillie de la face inférieure de l'élément à superposer.

Selon un mode de réalisation particulier du dispositif de chambre de raccordement selon l'invention, le moyen de collecte d'eau consiste en une gorge périphérique pratiquée dans le bord supérieur de l'élément, et qui déborde extérieurement pour pouvoir recueillir l'eau qui s'écoule le long de l'élément placé immédiatement au-dessus, tandis que le moyen d'évacuation consiste en au moins une ouverture pratiquée dans le rebord qui délimite extérieurement ladite gorge.

Selon une caractéristique additionnelle du dispositif de chambre de raccordement selon l'invention, la paroi de chacun desdits éléments de base présente intérieurement et périphériquement, des moyens de collecte d'eau de ruissellement, ainsi que des moyens d'évacuation de cette eau de ruissellement vers les moyens de collecte d'eau disposés périphériquement et extérieurement.

Selon une autre caractéristique additionnelle du dispositif de chambre de raccordement selon l'invention, les éléments de base comportent, sur au moins deux côtés opposés, des prédécoupes rondes destinées chacune, après découpe, au passage éventuel d'une gaine.

Les avantages et les caractéristiques du dispositif de chambre de raccordement selon l'invention, ressortiront plus clairement de la description qui suit et qui se rapporte au dessin annexé, lequel en représente plusieurs modes de réalisation non limitatifs.

Dans le dessin annexé :
- la figure 1 représente une vue schématique en perspective et en éclaté d'un dispositif de chambre de raccordement selon l'invention.
- la figure 2 représente une vue schématique en perspective d'une partie du même dispositif.
- la figure 3 représente une vue schématique en élévation et en coupe d'une partie du même dispositif.
- la figure 4 représente une vue schématique en perspective, en coupe et en éclaté d'une partie du même dispositif.

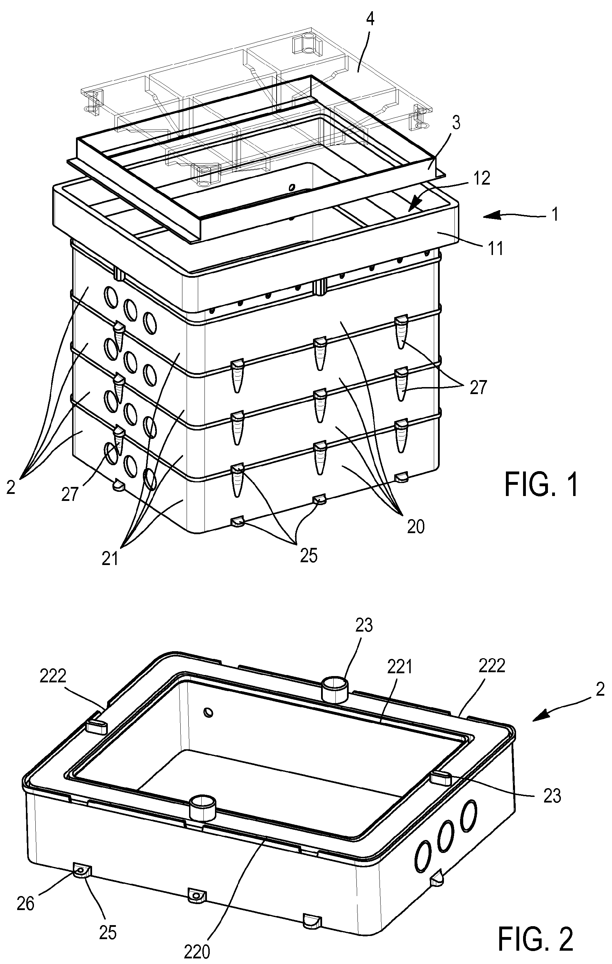

En référence à la figure 1, on peut voir un dispositif de chambre de raccordement selon l'invention, destiné à être placé dans un trou pratiqué dans le sol, en sorte de pouvoir y réaliser les raccordements de câbles ou fils, essentiellement de télécommunication.

Ce dispositif, tel que représenté, est constitué de la superposition de plusieurs éléments, en l'occurrence des éléments de base 1 et un élément supérieur 2.

Ces éléments 1 et 2 présentent chacun une forme générale de cadre, et viennent de moulage d'un matériau composite.

Les éléments sont superposés deux à deux, dans le mode de réalisation représenté, le dispositif comprend quatre éléments de base 1, surmontés d'un élément supérieur 2.

En référence à la figure 2, on peut voir un élément de base 2, lequel est de forme rectangulaire, et il comprend ainsi deux grands côtés 20 et deux petits côtés 21, chacun présentant une hauteur constante, et une épaisseur relativement importante.

On remarquera que l'élément 2 comporte, faisant saillie de sa face supérieure 22, des plots d'emboîtement 23, destinés à coopérer avec des cavités d'emboîtement correspondantes, non visibles, pratiquées dans la face inférieure 24, et permettant d'assembler deux éléments de base 1 entre eux, ou bien un élément supérieur 2 sur un élément de base 1.

On notera que de manière avantageuse, les plots 23 peuvent être garnis extérieurement d'au moins une nervure longitudinale, de préférence écrasable, permettant d'un ajustage des emboîtements.

Par ailleurs, en référence également à la figure 1, les éléments de base 1 comportent, faisant saillie des parois extérieures des côtés 20 et 21 au niveau de la face inférieure 24, des pattes 25, non limitativement une pour chaque côté 20 et trois pour chaque côté 21, munies chacune d'un trou 26 pour le passage d'une vis, non représentée, destinée à être vissée dans l'élément de base 1 placé immédiatement en-dessous

On notera que la vis peut être vissée directement dans l'épaisseur des côtés 20 ou 21, selon un axe oblique, ou bien dans une excroissance 27, que comportent en saillie les parois extérieures des côtés 20 et 21 au niveau de leur partie supérieure.

Ainsi l'emboîtement deux-à-deux de deux éléments de base 1 est complété d'une solidarisation par vissage.

On notera que les pattes 2 pourraient être remplacées par des cavités pratiquées dans les parois externes des côtés 20 et 21.

De manière avantageuse, les pattes 2 de l'élément de base le plus bas, permettent de fixer une plaque, non représentée, et qui constitue le fond du dispositif de chambre 1.

Par ailleurs, on peut noter que les éléments de base 1 comportent, en l'occurrence sur les côtés 21, des prédécoupes rondes 210, destinées chacune, après découpe, au passage éventuel d'une gaine.

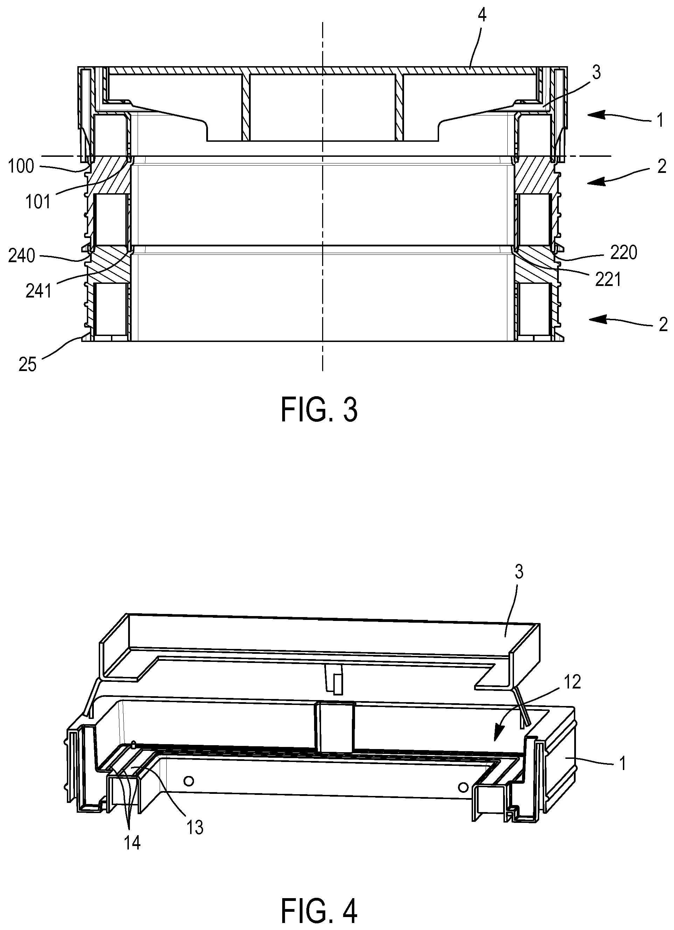

En référence aux figures 2 et 3, on peut voir également que la face supérieure 22 d'un élément de base 2, comporte d'une part une gorge périphérique externe 220, et une gorge périphérique interne 221, tandis que la face inférieure 24 comporte deux nervures périphériques externe 240 et interne 241, destinées à coopérer en emboîtement lors de la superposition des éléments 2.

De manière avantageuse, la gorge périphérique externe 22 est pourvue d'ouvertures 222 qui débouchent sur l'extérieur, et qui sont destinées à l'évacuation de l'eau susceptible de ruisseler sur la paroi externe et collectée par la gorge 22.

On notera qu'il est possible de réaliser une liaison entre les gorges périphériques interne 221 et externe 220, en sorte de pouvoir évacuer vers l'extérieur l'eau susceptible de ruisseler sur les parois internes.

On notera également que les ouvertures 222 sont créées en regard des pattes 25, ce qui permet à celles-ci d'y prendre place lors de l'emboîtement.

On notera encore que l'élément supérieur 1, comporte également, faisant saillie inférieurement, deux nervures périphériques externe 100 et interne 101, destinées à coopérer en emboîtement avec, respectivement, les gorges périphériques externes 220 et interne 221, de l'élément de base 2 placé immédiatement en dessous.

En ce qui concerne l'élément supérieur 1, outre un cadre 10 conformé pour s'adapter par emboîtement à un élément de base 2, il comporte un couronnement 11 qui forme une feuillure interne 12 destiné à loger un cadre métallique 3, préférentiellement en aluminium, lui-même adapté à recevoir un tampon 4.

En référence à la figure 4, on peut voir que la surface 13 du fond de la feuillure 12, présente des nervures 14 périmétriques et concentriques, et notamment du côté interne, destinées à constituer des moyens de retenue pour le béton permettant de sceller le cadre métallique 3, et éviter ainsi que ce béton ne tombe dans la chambre.

De manière avantageuse, la surface 13 peut comporter de petits plots régulièrement répartis, constituant des moyens d'écartement aptes à permettre au béton de s'épandre.

La solidarisation du cadre métallique 3 est de plus renforcée par la prise de pattes de fixation 30 dans du béton remplissant des logements 15 ménagés intérieurement à l'élément supérieur 1 dans la joue de feuillure.

## Revendications

1. Dispositif de chambre de raccordement, qui consiste en une pièce utilisée enterrée dans le sol, de forme parallélépipédique rectangle, fermée supérieurement par un ou plusieurs tampons (4), et logeant des moyens de raccordement de fils ou câbles faisant partie d'un réseau de distribution, et constitué de la superposition, au travers de moyens d'emboîtement (23), d'éléments (1, 2) en forme de cadre, et comprenant au moins un élément de base (2) et un élément supérieur (1) destiné à recevoir le ou lesdits tampons (4), où chacun desdits éléments (1, 2) vient de moulage d'un matériau composite, **caractérisé en ce que** chacun desdits éléments (1, 2) comporte, outre lesdits moyens d'emboîtement (23), des moyens (25) de réception de moyens de liaison conçus aptes à la solidarisation entre eux de deux éléments (1, 2) superposés, et **en ce que** chacun desdits éléments de base (2) présente extérieurement et périphériquement des moyens (220, 221) de collecte d'eau de ruissellement, ainsi que des moyens (222) d'évacuation de cette eau de ruissellement.

2. Dispositif de chambre selon la revendication 1, **caractérisé en ce que** chacun des moyens (25) de réception de moyens de liaison consiste en une cavité ou une partie saillante localisée à proximité du bord inférieur d'un côté de l'élément (1, 2), et percée d'un trou (26) apte à permettre le passage d'une vis destinée à être vissée dans un autre élément (2).

3. Dispositif de chambre selon la revendication 1 ou la revendication 2, **caractérisé en ce que** les moyens d'emboîtement consistent en des plots (23) faisant saillie de la face supérieure d'un élément (2), et destinés à coopérer en emboîtement avec des cavités pratiquées dans la face inférieure de l'élément (1, 2) à superposer.

4. Dispositif de chambre selon l'une quelconque des revendications 1 à 3, **caractérisé en ce que** les moyens d'emboîtement consistent en une gorge périphérique (220, 221) que comporte la face supérieure d'un élément (2), et destinée à accueillir une nervure périphérique (100, 101) qui fait saillie de la face inférieure de l'élément (1, 2) à superposer.

5. Dispositif de chambre selon l'une quelconque des revendications 1 à 4, **caractérisé en ce que** le moyen de collecte d'eau consiste en une gorge périphérique (220) pratiquée dans le bord supérieur de l'élément (2), et qui déborde extérieurement pour pouvoir recueillir l'eau qui s'écoule le long de l'élément placé immédiatement au-dessus, tandis que le moyen d'évacuation consiste en au moins une ouverture (222) pratiquée dans le rebord qui délimite extérieurement ladite gorge.

6. Dispositif de chambre selon la revendications 5, **caractérisé en ce que** la paroi de chacun desdits éléments de base (2) présente intérieurement et périphériquement, des moyens (221) de collecte d'eau de ruissellement, ainsi que des moyens d'évacuation de cette eau de ruissellement vers les moyens de collecte d'eau disposés périphériquement et extérieurement.

7. Dispositif de chambre selon l'une quelconque des revendications 1 à 6, **caractérisé en ce que** les éléments de base (2) comportent, sur au moins deux côtés opposés, des prédécoupes rondes destinées chacune, après découpe, au passage éventuel d'une gaine.

## Patentansprüche

1. Anschlussraumvorrichtung, die aus einem parallelepipedischen rechteckigen, oben von einem oder mehreren Puffern (4) verschlossenen Teil besteht, das in den Boden eingelassen verwendet wird und Anschlussmittel von Drähten oder Kabeln aufnimmt, die Bestandteil eines Verteilernetzes sind, und von der Übereinanderlagerung anhand von Rastmitteln (23) von rahmenförmigen Elementen (1, 2) gebildet ist und mindestens ein Basiselement (2) und ein oberes Element (1), das zur Aufnahme des oder der Puffer (4) bestimmt ist, umfasst, wobei jedes der Elemente (1, 2) aus einem Verbundmaterial geformt ist, **dadurch gekennzeichnet, dass** jedes der Elemente (1, 2) neben den Rastmitteln (23) Aufnahmemittel (25) von Verbindungsmitteln aufweist, die konstruiert sind, damit sie für die Verbindung zwischen zwei übereinandergelagerten Elementen (1, 2) untereinander imstande sind, und dass jedes der Basiselemente (2) außen und peripher Oberflächenwassersammelmittel (220, 221) sowie Ableitungsmittel (222) dieses Oberflächenwassers aufweist.

2. Raumvorrichtung nach Anspruch 1, **dadurch gekennzeichnet, dass** jedes der Aufnahmemittel (25) von Verbindungsmitteln aus einem Hohlraum oder aus einem hervorspringenden Abschnitt in der Nähe des unteren Rands einer Seite des Elements (1, 2) besteht und von einem Loch (26) durchbrochen ist, das imstande ist, den Durchgang einer Schraube zu erlauben, die bestimmt ist, in ein anderes Element (2) geschraubt zu sein.

3. Raumvorrichtung nach Anspruch 1 oder Anspruch 2, **dadurch gekennzeichnet, dass** die Rastmittel aus Stiften (23) bestehen, die aus der oberen Fläche eines Elements (2) herausragen und zum Zusammenwirken durch Rasten mit Hohlräumen bestimmt sind, die in die untere Fläche des übereinanderzulagernden Elements (1, 2) eingearbeitet sind.

4. Raumvorrichtung nach einem der Ansprüche 1 bis 3, **dadurch gekennzeichnet, dass** die Rastmittel aus einer Umfangsnut (220, 221) bestehen, welche die obere Fläche eines Elements (2) aufweist und bestimmt ist, eine Umfangsrippe (100, 101) aufzunehmen, die aus der unteren Fläche des übereinanderzulagernden Elements (1, 2) hervorsteht.

5. Raumvorrichtung nach einem der Ansprüche 1 bis 4, **dadurch gekennzeichnet, dass** das Wassersammelmittel aus einer Umfangsnut (220) besteht, die in den oberen Rand des Elements (2) eingearbeitet ist und die nach außen hervorsteht, um das Wasser aufnehmen zu können, das an dem Element entlang rinnt, das unmittelbar darüber platziert ist, wogegen das Ableitungsmittel aus einer Öffnung (222) besteht, die in die Kante eingearbeitet ist, welche die Nut außen begrenzt.

6. Raumvorrichtung nach Anspruch 5, **dadurch gekennzeichnet, dass** die Wand jedes der Basiselemente (2) innen und peripher Oberflächenwassersammelmittel (221) sowie Ableitungsmittel dieses Oberflächenwassers zu Wassersammelmitteln aufweist, die peripher und außen angeordnet sind.

7. Raumvorrichtung nach einem der Ansprüche 1 bis 6, **dadurch gekennzeichnet, dass** die Basiselemente (2) auf mindestens zwei gegenüberliegenden Seiten runde Vorausschritte aufweisen, die jeweils nach dem Ausschneiden für den eventuellen Durchgang einer Ummantelung vorgesehen sind.

## Claims

1. A connection chamber device, which consists of a used part buried in the ground, with a rectangular parallelepiped shape, upwardly closed by one or more covers (4), and housing means for connecting wires or cables that are part of a distribution grid, and made up of the superposition, through nesting means (23), of frame-shaped elements (1, 2), and comprising at least one base element (2) and one upper element (1) designed to receive said cover(s) (4), where each of said elements (1, 2) is molded with a composite material, **characterized in that** each of said elements (1, 2) includes, aside from said nesting means (23), means (25) for receiving connecting means designed to be suitable for securing two superimposed elements (1, 2) to one another, and **in that** each of said base elements (2) outwardly and peripherally has means (220, 221) for collecting runoff water, as well as means (222) for discharging this runoff water.

2. The chamber device according to claim 1, **characterized in that** each of the means (25) for receiving connecting means consists of a cavity or a protruding part located near the lower edge of one side of the element (1, 2), and pierced by a hole (26) able to allow the passage of a screw designed to be screwed in another element (2).

3. The chamber device according to claim 1 or claim 2, **characterized in that** the nesting means consist of studs (23) protruding from the upper face of an element (2), and designed to cooperate by nesting with cavities formed in the lower face of the element (1, 2) to be superimposed.

4. The chamber device according to any one of claims 1 to 3, **characterized in that** the nesting means consists of a peripheral groove (220, 221) included by the upper face of an element (2), and designed to receive a peripheral rib that (100, 101) protrudes from the lower face of the element (1, 2) to be superimposed.

5. The chamber device according to any one of claims 1 to 4, **characterized in that** the water collection means consists of a peripheral groove (220) formed in the upper edge of the element (2), and which outwardly overhangs, to be able to collect the water that flows along the element placed immediately above, while the discharge means consists of at least one opening (222) formed in the rim that outwardly defines said groove.

6. The chamber device according to claim 5, **characterized in that** the wall of each of said base elements (2) inwardly peripherally has means (221) for collecting runoff water, as well as means for discharging this runoff water toward the water collection means positioned peripherally and outwardly.

7. The chamber device according to any one of claims 1 to 6, **characterized in that** the base elements (2) include, on at least two opposite sides, round precuts each designed, after cutting, for the potential passage of a sheath.
